# EUROPEAN PATENT APPLICATION

(11) **EP 3 480 005 A1**
(43) Date of publication of application: **08.05.2019**
(21) Application number: 17382745.2
(22) Date of filing: 07.11.2017
(51) Int. Cl.: B30B 15/28, F16P 3/04

(54) **SAFETY LOCKING SYSTEM AND METHOD FOR MOVABLE TABLES OF HYDRAULIC PRESSES**

(71) Applicant: Maquinaria Hidraulica en General S.L., 48190 Sopuerta - Vizcaya (ES)
(72) Inventor: MONTOYA LOPEZ, Pedro José, 48190 Sopuerta - Vizcaya (ES)
(74) Representative: Carvajal y Urquijo, Isabel

(57) **Abstract**

A safety locking system and method for movable tables of hydraulic presses. The system comprises a toothed rail (4) secured to the hydraulic press (30); a locking pawl (3) secured to the movable table (2), having in the front part thereof a locking element (10) that faces the toothed rail (4) and being able to be engaged with the same in a male-female joint; a horizontal actuator (5) to horizontally move the locking element (10) to an extended or retracted position to produce the engagement or disengagement with the toothed rail (4); a pitch actuator (12) in the front part of the locking pawl (3) to generate, by means of the activation thereof, a vertical pitch of the locking element (10). Both actuators (5, 12) are controlled by a control unit (20).

## Description

### Field of the invention

The present invention pertains to the field of hydraulic presses and, more specifically, safety locking devices and methods for movable tables of hydraulic presses.

### Background of the invention

According to Standard UNE-EN 693, when the hydraulic presses entail a risk of injury (with a force greater than 150N) due to falls caused by gravity of the slide or movable table, a mechanical retention device, for example a chock, must be provided to be inserted into a press for the use thereof during repairs or any other necessary invention among dies that is different from manual feeding.

When the retention device is not able to absorb the full force of the press, it must be fixed the command system of the press, such that a cycle cannot be carried out while the device is in the position of use thereof and the slide of the press is held in the upper position thereof.

Traditionally, systems based on toothed rails and locking pawls were used for the purpose of ensuring the support of the movable tables in large presses. However, they have several drawbacks.
- The pawl cannot be introduced into all positions along the path of the movable table. This is due to the fact that the pawl and the teeth of the rail may collide. To avoid this unwanted contact, the movement of the movable table should be controlled until a position where the pawl and rail do not collide. Thus, the points where the movable table stops are reduced to areas where the table can be locked and other areas where it cannot be locked. These areas alternate based on the position of the teeth of the rail.
- To achieve locking, the movable table of the hydraulic press should be stopped in an area suitable for locking, which is not always easy, depending on the machine speeds and the relation between the suitable and unsuitable areas for locking.
- With the aim of improving the relation between the suitable and unsuitable areas for locking, the distance between the teeth of the rail is increased. This makes it possible for the pawl to float above the tooth without coming in contact with it, with the drawback that in the case of a sudden drop of the movable table, a collision occurs between the tooth and the pawl, which may lead to the breakage thereof with the subsequent loss of support of the movable table.
- It occurs that the movable table, either due to being suspended for a long time or due to another reason, rests on the retention device. In other words, the retention device supports a large part of the weight of the movable table. Therefore, unlocking the movable table can create two problems: the device does not have enough forces to carry out the unlocking maneuver; or if it does have enough force, the release of the table generates a small sudden fall thereof. Therefore, when releasing the table in the case that the pawl is locked, it should be accompanied with a small upward movement of the movable table.

In different patent documents, the use of a locking pawl and a toothed rail or rack as a retention mechanism for presses is disclosed, where the pawl is able to move horizontally. In some cases, the pawl is also able to move vertically; however, said movement is due to the fact that the pawl is actuated by a rotation mechanism, although it does not substantially improve the capacity to engage with a toothed rack.

Thus, the patent document DE3319527-A1 discloses a safety mechanism for a hydraulic press that has a toothed rack and a pawl suited to come into contact with the teeth of the rack in order to carry out safety locking. One of the most relevant aspects of said document is that it has locking means that are able to move both horizontally and vertically thanks to the pivoting mechanism of the pawl activated by a servomotor. With regards to the operation thereof, in the normal position, the pawl is arranged at a distance such that it does not come into contact with any part of the toothed rack. In the safety position, the pawl is pivoted until it comes into contact with at least part of the rack, such that the press will continue to lower until it reaches a tooth that butts against the pawl. Said pawl continues to pivot until it reaches a locked position defined by an inner stop. The embodiments disclosed in this document, however, lack a pitch movement with the aim of increasing the capacity of the pawl to reach a safe position.

The patent document CN203023776-U discloses a safety system for a hydraulic machine. The system comprises a toothed rack and a pawl activated by means of rotational movement around a rotation point through a hydraulic cylinder. Therefore, this document discloses the use of a rotational movement to activate the pawl. Furthermore, the document discloses the incorporation of a spring used only as an emergency mechanism, such that, in the case of power failure, the spring positions the pawl in the locked position.

The patent document CN2221454-Y discloses a protector of vertical movement for a punch press. Specifically, the embodiment that said document discloses refers to a locking pawl and toothed rack mechanism, where the pawl in this case is activated by means of electric magnets in a linear horizontal movement, not involving movement on the vertical axis.

The patent document CN203317786-U discloses a safety mechanism for a hydraulic press, which has a toothed rack arranged on a column and a locking device suitable for coming into contact with the teeth of the rack when the safety position thereof is activated. The embodiment of said document comprises a hydraulic cylinder that, upon activating the locked position of the press, extends the rod thereof, such that the pawl comes into contact with the teeth of the toothed rack, thus locking the vertical movement of the press. Indeed, this document does not disclose a movement of the pawl on the vertical axis, nor a possible pitch movement.

The system of the present invention adds improvements to the traditional rail system with the aim of preventing the aforementioned drawbacks.

### Description of the invention

The present invention relates to a safety locking system and method for movable tables of hydraulic presses. Specifically, the invention is based on the arrangement of an actuator that carries out a pitch in the locking system, such that it makes small movements on the pawl that help to increase the possibility that it will come into contact with the teeth of a toothed rail.

According to the present invention, the locking system of a movable table of a press has two independent actuators to carry out the movement of the pawl on the horizontal axis and a vertical pitch, unlike the actuators of the state of the art. A first actuator is responsible for carrying out the locking movement along the horizontal axis X that helps the locking pawl element come into contact with the toothed rail, and a second actuator that carries out a controlled vertical pitch of the locking element around the axis Z, perpendicular to the horizontal axis X and the vertical axis Y (the locking element advances, due to the action of the horizontal actuator, in a direction parallel to the horizontal axis X).

The arrangement of the second actuator, independent of the first actuator, together with a spring system, improves the interconnection of the locking element with the toothed rail when the locking element is in a position that coincides with a tooth of the rail. Therefore, the present invention optimizes the operation so that there are more positions where the locking element and the toothed rail coincide, adding a second actuator that carries out a pitch movement on the pawl to increase the possibility that it comes into contact with the toothed rail.

Specifically, the safety locking system of movable tables of hydraulic presses according to the present invention comprises a toothed rail secured to a hydraulic press, a locking pawl secured to the movable table of the hydraulic press, a horizontal actuator, a pitch actuator and a control unit.

The locking pawl has in the front part thereof a locking element that faces the toothed rail. The locking element can be engaged with the toothed rail in a male-female joint. The horizontal actuator is configured to horizontally move, based on the activation state of the horizontal actuator, the locking element to an extended position in order to produce engagement with the toothed rail or a retracted position in order to produce disengagement with the toothed rail. The control unit is configured to control the activation state of the horizontal actuator. The locking system comprises a pitch actuator located in the front part of the locking pawl and configured to generate, by means of the activation thereof by the control unit, a vertical pitch of the locking element.

The pitch actuator is preferably configured to generate in the activation thereof a force with a vertical component on the locking pawl that produces the vertical pitch of the locking element. The locking system may comprise elastic means configured to produce a vertical restoring force on the locking pawl in the direction opposite to the vertical force generated by the pitch actuator, where the vertical restoring force makes it possible to recover a horizontal resting position of the locking pawl when the pitch actuator is deactivated. The elastic means may comprise at least one spring that rests on the movable table.

The horizontal actuator may comprise a rod that can be moved horizontally and is attached on one end to the locking element, the rod being housed at least partially in a central body of the locking pawl. The control unit can be preferably configured to determine the extended or retracted position of the locking element through position detection means. In one embodiment, the locking system comprises a rail attached to the rod of the horizontal actuator. It also comprises a released movable table position detector and a locked movable table position detector which detect, respectively, the retracted position and the extended position of the rod by detecting the horizontal advancing position of the rail. The bar is preferably arranged vertically and projects from the locking pawl through a groove through which the bar slides horizontally during the activation movements of the rod, the groove being configured to prevent the rod from rotating on the longitudinal axis thereof.

The locking pawl may comprise a rotation axis on which the vertical pitch of the central body, the rod and the locking element is carried out though the action of the pitch actuator.

In one embodiment, the horizontal actuator is a hydraulic actuator controlled by an electrovalve for extending and retracting the horizontal actuator, where the locking system comprises a hydraulic command system of the horizontal actuator that comprises a hydraulic accumulator and a motor-pump group responsible for maintaining the pressure of the locking element on the toothed rail. The actuator is controlled by a single electrovalve with two solenoids or coils, a first solenoid coil for extending and a second solenoid coil for retracting the horizontal actuator. In order for there to be pressure on the element, it is necessary that the first solenoid coil be activated.

A second aspect of the present invention relates to a safety locking method for movable tables of hydraulic presses. The method comprises an activation process for locking a movable table of a hydraulic press. Said process is commanded by a unit control and comprises activating the extension of a horizontal actuator to horizontally move a locking element of a locking pawl secured to the movable table towards an extended position, in order to produce engagement of the locking element with the toothed rail secured to the hydraulic press. The locking activation process also comprises activating a pitch actuator located in the front part of the locking pawl to generate a vertical pitch of the locking element.

The locking activation process can comprise checking, once the activation of the extension is carried out, whether the horizontal actuator reaches the extended position; and in the case that said extended position is not reached in a predetermined time, deactivating the horizontal actuator before activating the pitch actuator, and reactivating the extension of the horizontal actuator subsequent to the activation of the pitch actuator.

The method can also comprise an activation process for unlocking the movable table, which, in turn, comprises deactivating the pitch actuator and activating the retraction of the horizontal actuator.

The present invention makes it possible to eliminate the spaces where locking is not possible since it produces contact between the teeth of the male-female parts that are involved in locking the movable table: the toothed rail and toothed rack of the locking element. In this way, locking is feasible along any point of the path of the movable table, and not only at specific points, passing from a (suitable or unsuitable) discrete space for locking to a continuous space for locking.

The locking system of the present invention is flexible with regard to the implementation thereof in new or existing hydraulic presses, since it requires little space and the technology used is simple. Furthermore, the locking system is easily maintained and/or repaired, such that long unproductive periods due to maintenance issues are avoided. In addition, the toothed rail is cut with short teeth, which facilitates the placement thereof in the hydraulic press, thus achieving high retention forces.

### Brief description of the drawings

What follows is a very brief description of a series of drawings that aid in better understanding the invention, and which are expressly related to an embodiment of said invention that is presented by way of a non-limiting example of the same.
Figures 1A, 1B and 1C show several views of the locking system of a movable table installed in a hydraulic press according to the present invention.
Figures 2A, 2B and 2C show a perspective view, a plan view and a longitudinal cross section, respectively, of the previous locking system. Figures 2D and 2E show a cross-sectional elevation view of the locking system with the locking pawl in an open and closed position, respectively.
Figures 3A and 3B show side view and front view, respectively, of the toothed rail used by the blocking system. Figure 3C shows a detailed enlargement of said toothed rail.
Figure 4A shows a front view of the locking element located on the end of the locking pawl. Figure 4B shows a cross-sectional view, according to the cutting plane AA, of Figure 4A. Figure 4C shows a detailed enlargement of the locking element.
Figures 5A and 5B show a locking pawl rotated with respect to the horizontal axis, in an open and closed position, respectively.
Figure 6A shows the collision of the teeth of the locking element with the teeth of the toothed rail, produced by the horizontal movement of the actuator. Figure 6B shows a small pitch of the locking element to prevent the collision. Figure 6C shows the engagement with the toothed rail by means of the final horizontal advancement with the already rotated locking element.
Figure 7 shows a simplified diagram of the control electronics of the locking system.
Figure 8 shows a flow chart of the activation process for locking the movable table.
Figure 9 shows a flow chart of the activation process for unlocking the mobile table.
Figure 10 shows a diagram of a hydraulic command system of the actuators of the locking system.

### Detailed description of the invention

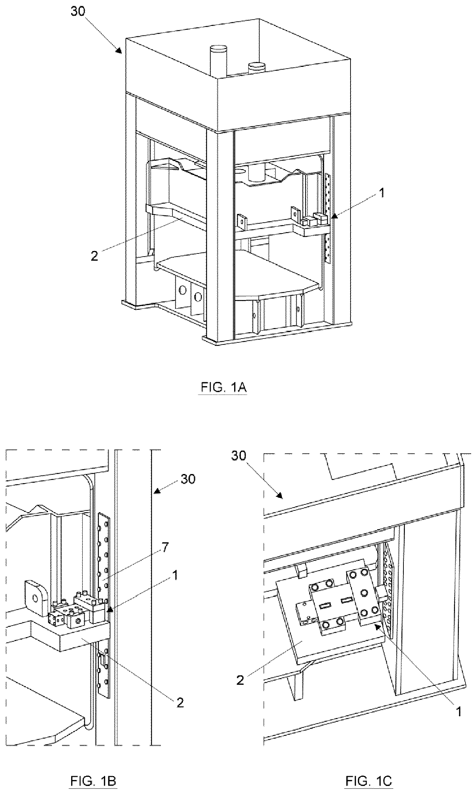

The present invention relates to a locking system of a movable table of a hydraulic press. **Figure 1A** shows a perspective view of the locking system 1 installed in a hydraulic press 30, according to one possible embodiment. **Figures 1B and 1C** show, in two different views, a detailed enlargement of the area of the hydraulic press 30 in which the locking system 1 is mounted.

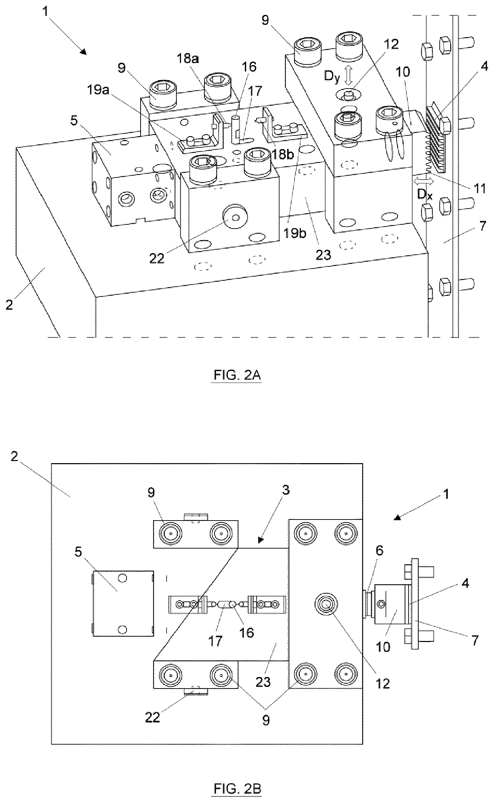

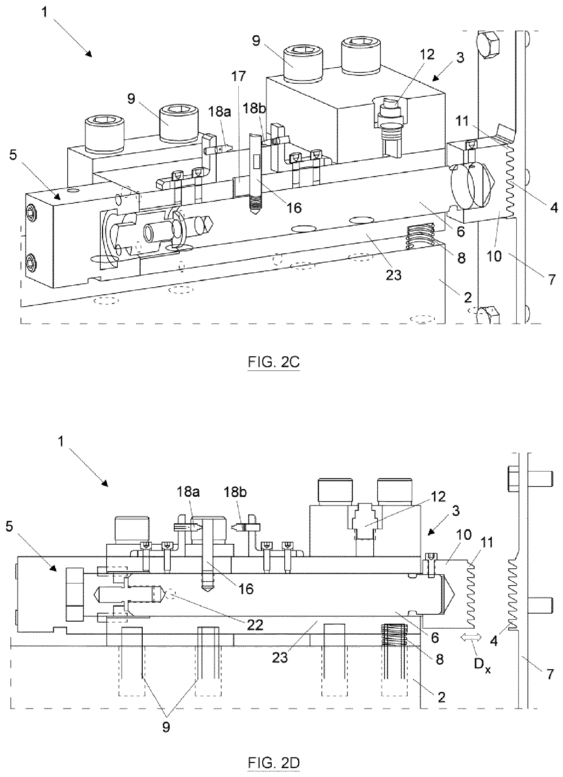

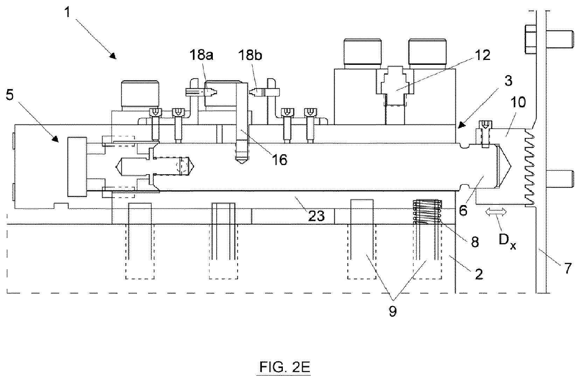

**Figures 2A** and **2B** show, respectively, a perspective view and a plan view of the locking system 1 of the preceding figures, screwed to the movable table of the hydraulic press 30, for an open or deactivated position (Figure 2A) and a closed or activated position (Figure 2B) of the locking system. **Figure 2C** shows a cross-sectional perspective view according to a longitudinal cutting mid-plane of the activated locking system 1, which schematically shows inner parts of the elements of the locking system 1. **Figures 2D** and **2E** show a cross-sectional mid-elevation view with the locking pawl 3 in open and closed position, respectively, without rotation or pitch of the locking pawl 3. Said figures also show the movable table 2 of the hydraulic press 30 upon which the locking system 1 acts (the movable table 2 itself does not form part of the locking system 1).

The locking system 1 comprises a toothed rail 4, a locking pawl 3 adapted to carry out male-female engagement with the toothed rail 4, and activation means of the locking pawl 3. The locking pawl 3 is secured to the movable table 2 by means of securing means, preferably implemented by means of threaded screws 9 or other similar securing elements.

The locking pawl 3 has, on the end closest to the toothed rail 4, a locking element 10 which is prepared to be engaged with the toothed rail 4 in a male-female joint. The activation means of the locking pawl comprise, in turn, a first actuator, horizontal actuator 5, preferably hydraulic (for example, a piston), which produces, once activated, a movement *Dₓ* of the locking element 10 on the horizontal axis X, towards the toothed rail 4, by the linear advancement of a cylinder or rod 6 attached on the end thereof to the locking element 10, for example, by means of a threaded connection. The locking element 10 comprises a toothed rack 11 complementary to and facing the toothed rail 4.

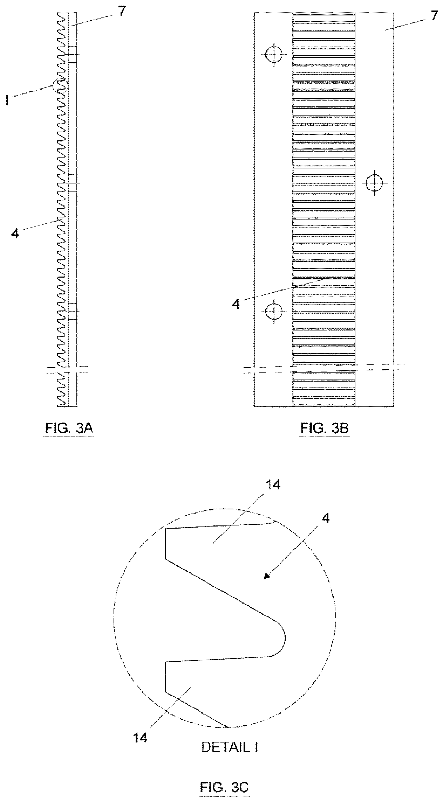

The preceding figures only show a part of the entire toothed rail 4, which is preferably placed, secured or incorporated along a sheet metal or plate 7 screwed to the hydraulic press 30 (in a direction parallel to the vertical axis Y), as shown in the embodiment of **Figures 3A** and **3B****,** which show a side view and a front view, respectively, of the plate 7 with the toothed rail 4. **Figure 3C** shows a detailed enlargement of two teeth 14 of the toothed rail 4. In this example, an opening between teeth of approximately 30° is shown, but in the specific case, different angles and sizes of the teeth 14 and the toothed rack 4 can be seen.

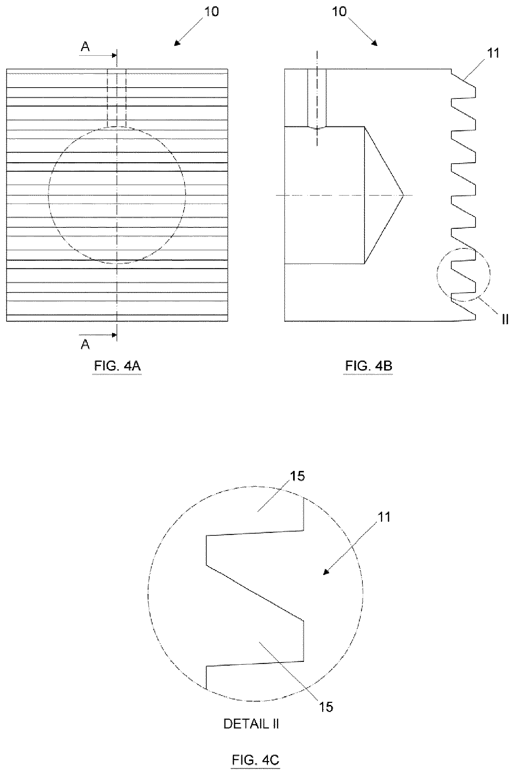

**Figure 4A** shows a front view of the locking element 10 located on an end of the locking pawl 3. **Figure 4B** shows a cross-sectional view of Figure 4A, according to the cutting plane AA. **Figure 4C** shows a detailed enlargement of two teeth 15 of the toothed rack 11 of the locking element 10, with a geometry that is complementary to the toothed rail 4 to allow for the male-female engagement. The example of Figures 3C and 4C shows, given the shape and arrangement of the teeth (14, 15), that the toothed rail 4 acts as a male rail and the toothed rack 11 of the blocking element 10 acts as a female rail.

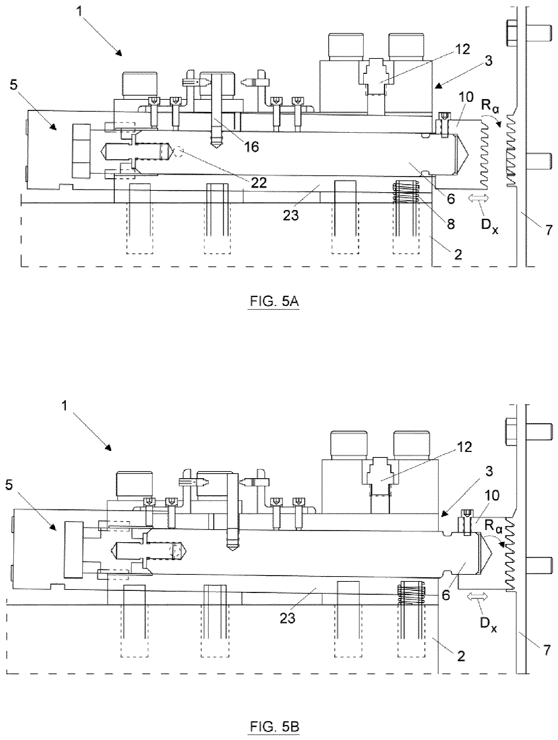

In the upper front part (the previous or front part corresponds to the part closest to the toothed rail 4) of the locking pawl 3, there is a second actuator, pitch actuator 12, preferably hydraulic and that can be implemented, for example, by means of a piston or a similar actuator. In the case of being actuated, it causes a controlled pitch *R_{α}* of the locking pawl 3 around the rotation axis 22, as shown in **Figures 5A** and **5B****,** which show the locking pawl 3 rotated with respect to the horizontal axis X, in an open and closed position, respectively. To generate the pitch *R_{α}* of the locking pawl 3, the pitch actuator 12 is arranged vertically (such that when it is activated, the actuator moves parallel to the vertical axis Y) or at an angle with respect to the horizontal axis X suited to generate a torque sufficient enough to produce the pitch *R_{α}* around the rotation axis 22. As shown in Figures 5A and 5B, the vertical pitch *R_{α}* generated by the second actuator 12 is a rotation with respect to the axis Z. The pitch *R_{α}* will depend, among other factors, on the essentially forward position of the actuator with respect to the locking pawl, the movement *D_{y}* of the pitch actuator 12 once activated, the force of activation of the pitch actuator 12 and the angle of impact of the pitch actuator 12 on the surface of the locking pawl 3 (in other words, if it impacts vertically or at a small specific angle with respect to the horizontal axis X, for example 1°).

As shown in Figure 2A, the locking pawl 3 is screwed on the ends thereof to the movable table 2, and has a central body 23 that houses the rod 6 of the horizontal actuator 5. The central body 23 is attached to the rotation axis 22, such that when the pitch actuator 12 is activated, the momentum generated with respect to the rotation axis 22 generates the rotation of the central body 23. Since the horizontal actuator 5 is secured to the central body 23, it also rotates along with the central body 23. Therefore, the rod 6 of the horizontal actuator 5 and the locking element 10, attached to the rod 6, also rotate along with the central body 23. To avoid collision with the movable table 2 in the rotational movement, the horizontal actuator 5 as well as the central body 23 are located higher than the movable table. To facilitate the restoration of the horizontal resting position when the pitch actuator 12 ceases to act and generate momentum, the locking pawl 3 is supported on elastic means, implemented for example in one or several springs 8 that rest on the movable table 2, as shown for example in Figure 2C. Regulating the rotation angle of the locking element 10 produced by the activation of the pitch actuator 12 can be carried out by regulating the path or length of the cylinder of the pitch actuator 12 or varying the support position thereof on the locking pawl 3 with respect to the rotation axis 12.

In the embodiment shown, the movable table 2 is arranged under the locking system 1. In another possible embodiment, the movable table can be arranged above the locking system 1. In this case, the pitch actuator 12 would be located in the lower front part of the locking pawl 3, in other words, under the locking pawl 3. The function of the pitch actuator 12 is to impact in the front part of the central body 23 of the closing pawl 3 with a vertical component with force sufficient enough to generate a rotation or pitch of the locking element 10 with respect to the axis Z (i.e. rotation in the plane X-Y). Likewise, the spring or springs 8 may be located above the locking pawl 3, under the locking pawl 3 or integrated in the pitch actuator 12 itself.

The vertical movement *D_{y}* of the pitch actuator 12 is reduced, and will depend on the specific geometry chosen for the locking pawl 3 and the toothed rail 4 (normally a movement between 1 and 10 mm; in the particular embodiment of Figure 5A, the movement is around 4 mm). The horizontal actuator 5, located in the rear part of the locking pawl 3, pushes the locking element 10 to reach the locked position, generating sufficient force to keep the movable table 12 locked.

The locked position and released position of the movable table 12 are controlled by position detection means, implemented for example by a released movable table position detector 18a and a locked movable table position detector 18b, as shown in the figures, which detect the advancing or retreating position of the locking pawl 3, for example by means of detecting a tab or a protrusion of the locking pawl (for example, the bar 16 shown in the figures). To detect the advancing position (locking) or retreating position (release) of the locking pawl 3, any type of known sensor can be used (e.g. magnetic, optical, pressure, ultrasound, etc.), which can be supported on any element of the locking system 1, in this case, the supports (19a, 19b) screwed to the central body 23 of the locking pawl 3.

The bar 16 used to detect the advancing position of the locking element 10 is attached to the rod 6 of the horizontal actuator 5, for example, by means of a threaded end. In one possible embodiment, as shown in the figures, the bar 16 is arranged vertically and protrudes from the central body 23 from a groove 17 through which it slides horizontally in the activation movements of the rod 6. The bar 16 has two functions. On one hand, it prevents the rod 6 from rotating on the axis thereof, dragging the locking element 10 with it. On the other hand, the bar 16 serves as a reference for the two position detectors (18a, 18b) that indicate the state of advancement of the locking element 10.

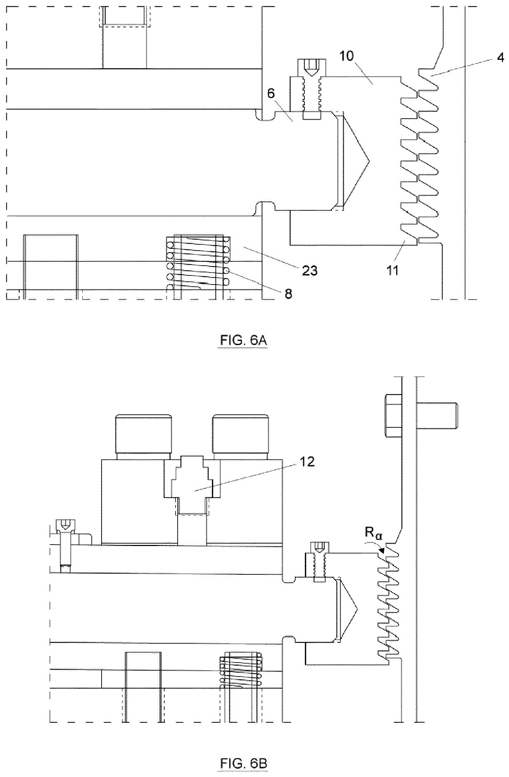

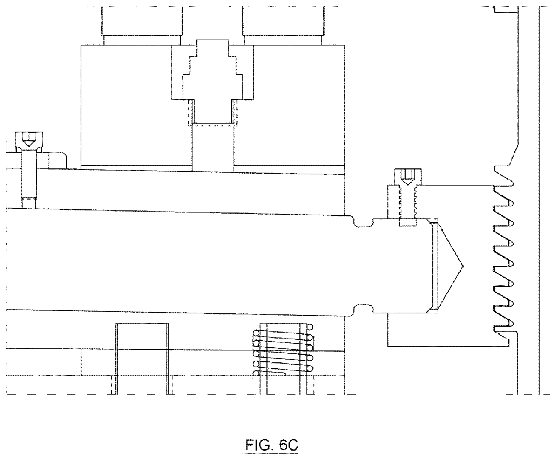

The objective of the tilting of the central body 23 of the locking pawl 3, and with it, the tilting of the locking element 10, is to allow the toothed rack 11 of the locking element 10 to engage with the toothed rail 4 in any position of the movable table 2. In the case that the possibility of tilting the locking element 10 does not exist, as shown in **Figure 6A****,** it may occur that in the horizontal movement of the locking element 10, a collision of the teeth 15 of the toothed rack 11 with the teeth 14 of the toothed rail 4 is caused. This situation would prevent, or at least impede, the engagement of the locking element 10 with the hydraulic press 30, such that the movable table 2 would have to slightly move up or down to allow engagement. To avoid these drawbacks, the controlled pitch *R_{α}* of the locking element 10 by means of the activation of the pitch actuator 12 would make it possible to fit the toothed rack 11 and the toothed rail 4 at a suitable angle, as shown in the example of **Figure 6B****.** Once the pitch has been completed, the horizontal actuator 5 is reactivated, such that the joint action of both actuators (5, 12) allows for the final engagement shown in **Figure 6C****.**

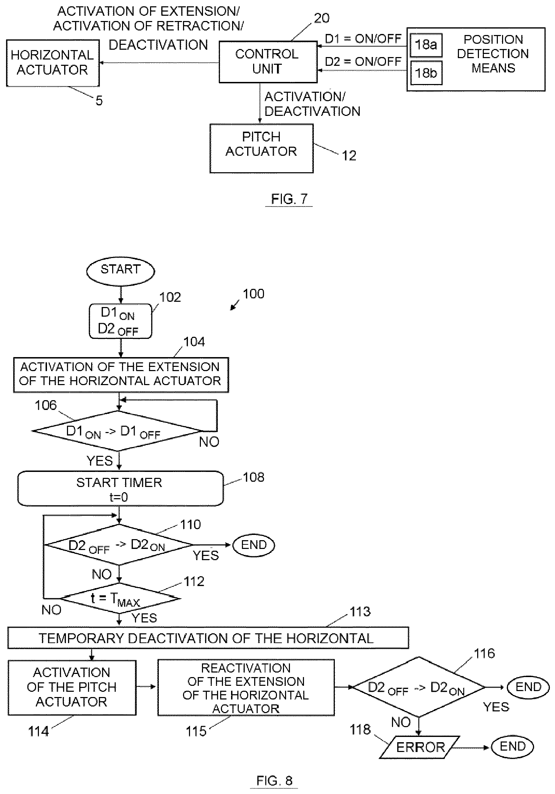

**Figure 7** shows, in a schematic and simplified way, an embodiment of the electronics used in the locking system 1 to activate the locked and unlocked positions of the movable table 2. According to this figure, a control unit 20 (a controller or data processing means implemented for example by means of a microcontroller or an equivalent control device) receives the information from the position detection means, released movable table position detector 18a and locked movable table position detector 18b (D1 being the sign received from the released movable table position detector 18a and D2 being sign received from the locked movable table position detector 18b), processes said information and controls, based on the result of said processing, the activation or deactivation of the horizontal actuator 5 and the pitch actuator 12.

The activation of the pitch actuator 12 implies the generation of a force that in turn generates a momentum to produce the pitch of the locking element 10, normally by means of extending a movable element of said actuator (for example, a rod), although it can also be carried out by equivalent means, such as driving a stream of air at a high pressure. The deactivation of the pitch actuator 12 may imply, in one embodiment, the cessation of said force that generates the momentum, allowing the horizontal position to be restored by means of the action of the spring or springs 8. In another embodiment, deactivation may imply the retraction of the actuator, while deactivation would imply the retraction of the actuator.

In one embodiment of the horizontal actuator 5, as shown in Figure 7 and in the following figures, the activation of the horizontal actuator 5 implies the generation of a force that either leads to the extension (activation of extension) or the retraction (activation of retraction) of the locking element 10 in the horizontal direction (controlled, for example, by means of two electrovalves), while the deactivation of the horizontal actuator 5 implies the cessation of the force. In another embodiment, activation may imply the extension of the actuator and deactivation may imply the retraction of the same.

**Figure 8** shows, according to a possible embodiment, a flow chart of the activation process 100 for locking the movable table 2, carried out by the control unit 20. The process 100 begins at a position in which the movable table 2 is released 102 (D1=ON, D2=OFF), a position that is detected by the released movable table position detector 18a. The control unit 20 receives an order, for example, by means of the activation of a push button or a switch, to lock the movable table 2. To do so, the control unit 20 commands the activation of the extension 104 of the horizontal actuator 5, moving the locking element 10 towards the toothed rail 4 in the direction of the horizontal axis X.

From said activation, the control unit 20 checks 106 whether there is a change in the signal coming from the released movable table position detector 18a (for example, if the state thereof changes from ON to OFF: D1_{ON}->; D1_{OFF}). When the locking pawl 3 moves towards the control unit 20, it indeed detects said change of the signal coming from the released movable table position detector 18a. At this time, the control unit 20 starts a timer 108 and goes on to repeatedly check 110 if there is a change in the signal coming from the locked movable table position detector 18b.

If in a predetermined time T_{MAX} (as verified in the step 112), which can be adjusted by a timer of the unit control 20 itself, the position of the locked movable table (D2=ON), detected by the locked movable table position detector 18b, has not been reached, the control unit 20 considers that there has been interference with the teeth of the toothed rail 4. In this case, the unit control 20 commands the temporary deactivation 113 of the horizontal actuator 5 during a brief period of time (to avoid generating forces that impede the rotational operation of the locking element 10) and the activation 114 of the pitch actuator 12, which generates a slight pitch or downward movement (of approximately 4 mm in the example of Figure 5A) in the front part of the locking pawl 3. Joined to a geometry suited for the toothed rail 4 and the toothed rack 11, such as those shown in Figures 3C and 4C, the pitch generated by the pitch actuator 12 ensures correct locking of the movable table 2 in any position.

After the activation 114 of the pitch actuator 112 and the reactivation of the extension of the horizontal actuator 115, it is checked 116 whether the locked position of the movable table has indeed been reached. Once the locked position of the movable table (D2=ON) is detected, the maneuver is completed, independently of whether the pitch actuator 12 has be used or not. If the locked position of the movable table is not detected (D2 remains OFF), it is considered that an error occurred 118 and appropriate measures are taken given the possibility of a dangerous situation (for example, the control unit 20 can inform the hydraulic press 30 to stop the maneuver, or it can issue an alarm message (e.g. an acoustic and/or luminous signal) to notify the operator). As shown in the flow chart, in the case that the locked position of the movable table (D2=ON) is detected before the predetermined time T_{MAX} passes, the process 100 ends without activating the pitch actuator 12, since it is not necessary (the movable table 2 in this case would be positioned at a height suitable for engagement).

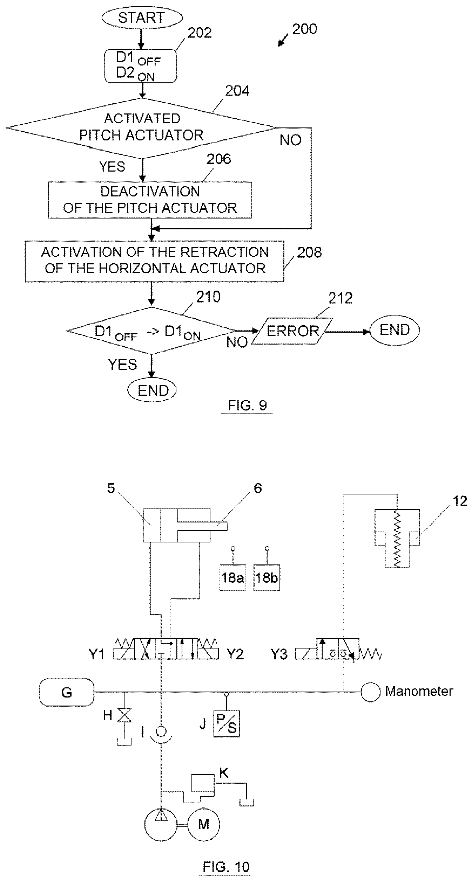

**Figure 9** shows, according to one possible embodiment, the activation process 200 for unlocking the movable table carried out by the control unit 20. The process 200 begins at a position in which the movable table 2 is locked 202 (D1=OFF, D2=ON), a position that is detected by the locked movable table position detector 18b.

The control unit 200 checks 204 whether the pitch actuator 12 has been activated 114 in the immediately previous locking process 100, in which case it proceeds to deactivate 206 the pitch actuator, generating a slight pitch or upward movement of the locking pawl 3, produced by counterclockwise rotation around the rotation axis 22, which facilitates the unlocking of the movable table 2. The fact that the locking pawl 3 is held between springs 8 and the cut teeth are short allows for a smoother exit of the locking pawl 3.

Next, regardless of whether the deactivation 206 of the pitch actuator took place, the retraction 208 of the horizontal actuator 5 is activated, moving the locking pawl 3 in the direction of the horizontal axis X, separating it from the toothed rail 4. Optionally, the control unit 20 can check 210 that the movable table has reached the unlocked position by means of the status of the position detector of the released movable table 18a (D1=ON) and no error or obstruction occurred in the retraction movement of the locking pawl 3. In the case that the unlocked position of the movable table is not detected (D1 remains OFF), it is considered than an error occurred 212 and the appropriate measures are taken (for example, the measures listed for the error 118 in the locking process 100 of Figures 8).

In one preferred embodiment, the horizontal actuator 5 as well as the pitch actuator 12 of the locking system 1 are hydraulic actuators, although other types of actuators can be used (for example, the pitch actuator 12 can be electric, of the electromagnetic type). **Figure 10** shows a diagram for a possible hydraulic command system of both actuators (5, 12). The horizontal actuator 5 is controlled by an electrovalve with a first solenoid coil Y1 for advancing and a second solenoid coil Y2 for retreating the horizontal actuator, being able to use a position detector as a safety detector in order to protect the machine from malfunctioning of any of the solenoid coils. The pitch actuator 12 is controlled by an electrovalve with a solenoid coil Y3. The electrovalves of both actuators (5, 12) are commanded by the control unit 20, according to the activation process for locking or unlocking as described above.

The circuit is completed with a hydraulic accumulator G, a key H for the manual unloading of the accumulator, a non-return valve I, a pressure transducer J, a safety valve K, and a motor-pump group M. The motor-pump group M should provide very little flow, preferably less than 1 l/min.

If no electrovalve is actuated, the flow generated by the motor-pump group M is occupied in the filling of the accumulator G, such that there is a clamping pressure generated by the accumulator G even if the motor-pump group M is stopped intentionally or accidentally, thus preventing possible accidents during the handling of the hydraulic press by the operators. The clamping pressure is read by the pressure transducer J. In order for there to be pressure in the horizontal actuator 5, the first solenoid coil Y1 must be activated.

When the second electrovalve Y2 is actuated by the control unit 20, the pressure is communicated with the annular face of the horizontal actuator 5, which creates a quick unlocking movement. Since the accumulator G will be loaded to 100%, it is unloaded before starting the unlocking movement. The control unit 20 controls the loading of the accumulator G by means the pressure transducer J. With this, it has all the pressure of the hydraulic system and all the flow thereof to quickly unlock the locking pawl 3.

When the control unit 20 has to lock the movable table 2 of the hydraulic press, it activates the first solenoid coil Y1, with which the pressure of the system is immediately connected to the full face of the horizontal actuator 5, which creates the advancement of the rod 6 attached to the locking element 10 and the emptying of the accumulator G, such that the pressure is reduced. If in a short time (T_{MAX}) the released movable table position detector 18a is not actuated and the locked movable table position detector 18b is not actuated either, the first electrovalve Y1 must be deactivated for a moment and the third electrovalve Y3 must be activated to generate the pitch of the device (and with it, a slight vertical movement), which corresponds to the activation 114 of the pitch actuator shown in Figure 8. In this way, the locking pawl 3 is locked and the locked movable table position detector 18b must be activated, thus indicating that the movable table 2 is locked, and it can proceed to deactivate the third electrovalve Y3.

As explained above, the control unit 20 is responsible for managing the electric command system of the locking system 1. In the case that the control unit 20 detects abnormal operation of the locking system 1, it can inform the command system of the hydraulic press 30 so that it monitors the locking system 1 and stops the maneuver of the hydraulic press.

## Claims

1. A safety locking system for movable tables of hydraulic presses, which comprises:
a toothed rail (4) secured to a hydraulic press (30);
a locking pawl (3) secured to a movable table (2) of the hydraulic press (30), having the locking pawl (3) in the front part of a locking element (10) facing the toothed rail (4), the locking element (10) being engaged with the toothed rail (4) in a male-female joint;
a horizontal actuator (5) configured to horizontally move, based on the activation state of the horizontal actuator (5), the locking element (10) to an extended position in order to produce engagement with the toothed rail (4) or a retracted position in order to produce disengagement with the toothed rail (4);
a control unit (20) responsible for controlling the activation state of the horizontal actuator (5);
**characterized in that** the locking system (1) comprises a pitch actuator (12) located in the front part of the locking pawl (3) and configured to generate, by means of the activation thereof by the control unit (20), a vertical pitch of the locking element (10).

2. The locking system according to claim 1, where the pitch actuator (12) is preferably configured to generate in the activation thereof a force with a vertical component on the locking pawl (3) that produces the vertical pitch of the locking element (10).

3. The locking system according to claim 2, which comprises elastic means configured to produce a vertical restoring force on the locking pawl (3) in the direction opposite to the vertical force generated by the pitch actuator (12), where the vertical restoring force makes it possible to recover a horizontal resting position of the locking pawl (3) when the pitch actuator (12) is deactivated.

4. The locking system according to claim 3, where the elastic means (8) comprise at least one spring (8) that rests on the movable table (2).

5. The locking system according to any of the preceding claims, where the horizontal actuator (5) comprises a rod (6) that can be moved horizontally and is attached on one end to the locking element (10), the rod (6) being housed at least partially in a central body (23) of the locking pawl (3).

6. The locking system according to any of the preceding claims, where the control unit (20) is configured to determine the extended or retracted position of the locking element (10) through position detection means (18a, 18b).

7. The locking system according to claims 5 and 6, which comprises:
a bar (16) attached to the rod (6) of the horizontal actuator (5);
a released movable table position detector (18a) and a locked movable table position detector (18b) which detect, respectively, the retracted position and the extended position of the rod (6) by detecting the horizontal advancing position of the rail (16).

8. The locking system according to claim 7, where the bar (16) is arranged vertically and projects from the locking pawl (3) through a groove (17) through which the bar (16) slides horizontally during the activation movements of the rod (6), the groove (17) being configured to prevent the rod (6) from rotating on the longitudinal axis thereof.

9. The locking system according to any of the claims 5 or 6, where the locking pawl (3) comprises a rotation axis (22) on which the vertical pitch of the central body (23), the rod (6) and the locking element (10) is carried out though the action of the pitch actuator (12).

10. The locking system according to any of the preceding claims, where the horizontal actuator (5) is a hydraulic actuator controlled by an electrovalve with a first solenoid coil (Y1) for extending and a second solenoid coil (Y2) for retracting the horizontal actuator (5),
and where the locking system comprises a hydraulic command system of the horizontal actuator (5) that comprises a hydraulic accumulator (G) and a motor-pump group (M) responsible for maintaining the pressure of the locking element (3) on the toothed rail (4).

11. A safety locking method for movable tables of hydraulic presses, which comprises an activation process (100) for locking a movable table (2) of a hydraulic press (30), where said process (100) is commanded by a unit control (20) and comprises activating (104) the extension of a horizontal actuator (5) to horizontally move a locking element (10) of a locking pawl (3) secured to the movable table (2) towards an extended position, in order to produce engagement of the locking element (10) with the toothed rail (4) secured to the hydraulic press (30);
**characterized in that** the locking activation process (100) comprises activating (114) a pitch actuator (12) located in the front part of the locking pawl (3) to generate a vertical pitch of the locking element (10).

12. The method according to claim 11, where the locking activation process (100) comprises checking (110), once the activation (104) of the extension is carried out, whether the horizontal actuator (5) reaches the extended position; and in the case that said extended position is not reached in a predetermined time (T_{MAX}):
it can deactivate (113) the horizontal actuator before activating (114) the pitch actuator (12);
reactivate (115) the extension of the horizontal actuator (5) subsequent to the activation (114) of the pitch actuator (12).

13. The method according to claim 11 or 12, which comprises an activation process (200) for unlocking the movable table that comprises deactivating (206) the pitch actuator (12) and activating (208) the retraction of the horizontal actuator (5).
